Europäisches Patentamt

European Patent Office

Office européen des brevets

(11) Publication number: 0 313 359
A2

# EUROPEAN PATENT APPLICATION

(21) Application number: 88309878.2

(22) Date of filing: 20.10.88

(51) Int. Cl.⁴: G 11 B 27/00
G 07 F 17/30, G 11 B 27/34

(30) Priority: 20.10.87 GB 8724569

(43) Date of publication of application:
26.04.89 Bulletin 89/17

(84) Designated Contracting States: DE FR GB IT

(71) Applicant: JOHN & IVOR ARBITER LIMITED
18A Soho Square
London W1V 5FB (GB)

(72) Inventor: Harding, Andrew George William
47 Patterson Close
Basingstoke, Hampshire, RG22 4NX (GB)

(74) Representative: Rackham, Stephen Neil et al
GILL JENNINGS & EVERY 53-64 Chancery Lane
London WC2A 1HN (GB)

(54) Programmable audio-visual reproduction apparatus.

(57) A programmable reproduction system for playing digitally encoded records includes
a reproduction apparatus (2) arranged to play a selected one of a number of records.

A control unit (1) connected to the reproduction apparatus (2) includes a video display unit (3) for displaying
details of records available for selection by the user and input means (4) for the user to input a selection, the
control means (1) being arranged to transmit a control signal to the reproduction apparatus (2) to cause the
selected record to be played. A writable data storage unit (8) is releasably connected to the control unit (1). In
use the control unit (1) reads from the data storage unit (8) data for display on the visual display unit (3) and
writes to the data storage unit (8) details of the selection made by the user, the details being stored in the data
storage unit (8) fo subsequent analysis.

Fig.1.

**Description**

## Programmable Audio-Visual Reproduction Apparatus

This invention relates to systems for playing digitally encoded records such as Compact Discs. It is particularly concerned with C.D. juke boxes in which a track on one of a number of Compact Discs is selected and played after the payment of a charge using a conventional coin freed system. Since the high information density of digital storage media makes possible a selection from a very large number of tracks providing suitable ergonomics for the control of the selection process normally presents major difficulties.

Similarly it is difficult to display information on all the choices available to the user. In conventional juke boxes playing vinyl singles labels bearing the title of each disc are provided for the site operator with each new batch of records. These labels are then typically inserted beside buttons on the jukebox which the user presses to make the appropriate selection. However this arrangement becomes impractical with the many hundreds of tracks available for selection on the compact disc jukebox.

According to this invention a programmable reproduction system for playing digitally encoded records comprises

a reproduction apparatus arranged to play a selected one of a number of records,

a control unit connected to the reproduction apparatus, the control unit including a video display unit for displaying details of records available for selection by the user and input means for the user to input a selection, the control means being arranged to transmit a control signal to the reproduction apparatus to cause the selected record to be played, and

a writable data storage unit releasably connected to the control unit, in use the control unit reading from the data storage unit data for display on the visual display unit, and writing to the data storage unit details of the selection made by the user, the details being stored in the data storage unit for subsequent analysis.

The use of electronically controlled video display units to provide an appropriate user-interface is of course well known in a variety of fields. The present inventor has found however that in the field of programmable reproduction systems such as CD jukeboxes special advantages arise from the use of a VDU-based interface in combination with a detachable data storage cartridge. Such a cartridge as well as providing data on all the tracks available for selection by the user, and so doing away with the need for pre-printed title cards of the type used with conventional jukeboxes, is able to record data on the selections made by users over a period of time. Then later, typically when a new batch of discs is supplied together with a new pre-programmed cartridge, the cartridge can be taken away and analysed to establish which tracks have been played. This information may be used by the operator to ensure that an optimum selection of discs is provided for each site and may also, for example, be used to provide information for copyright licensing authorities.

Preferably the programmable reproduction system is coin-operated, the control unit including a coin acceptor and being arranged to write to the data storage unit details of the coins accepted by the coin acceptor unit.

The data storage unit of the present invention can also conveniently be used to provide accounting information.

Preferably the data storage unit comprises a non-volatile random access memory including first and second data storage regions, the first data storage region being arranged to store pre-programmed details of the records available for selection in the reproduction system and the second data storage region being arranged to store details of the selections made by users, the control unit being arranged to read data from the first data storage region and to write data to the second data storage region. Preferably the second data storage region records the total number of occasions on which each record is selected, the control unit being arranged to increment the corresponding data item in the second data storage region each time a record is selected.

A system in accordance with the present invention will now be described in detail with reference with the accompanying drawings, in which:-

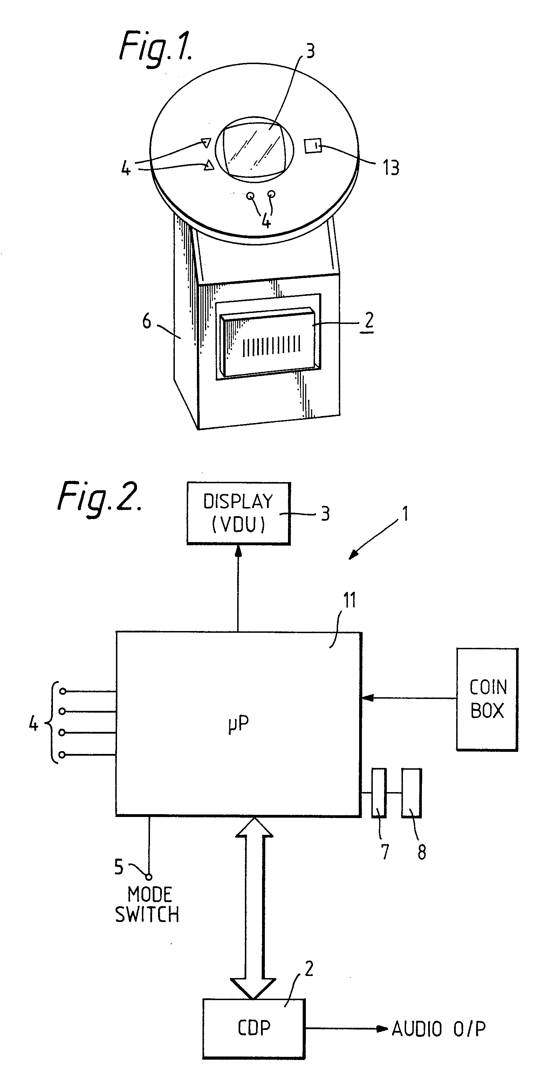

Figure 1 is a perspective view of a system in accordance with the present invention;

Figure 2 is a block diagram of the system of Figure 1;

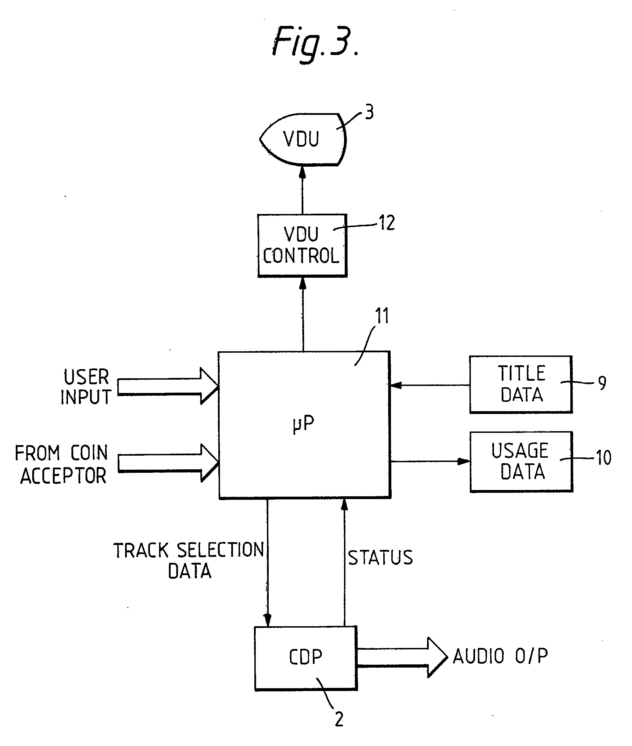

Figure 3 is a diagram showing data flow in the system of Figure 2;

Figure 4 is a diagram showing the format of title data;

Figure 5 is a memory map showing the arrangement of data held in the data storage cartridge of Figure 2; and,

Figure 6 is a memory map of an alternative embodiment.

A programmable reproduction system comprises a control unit 1 connected to a reproduction apparatus 2, which in the present example is a compact disc player capable of holding 60 discs, such as that marketed by Sony with the serial number CDK3000PII. The control unit 1 includes a visual display unit (VDU) 3 and four user controls 4 which in practice are formed as touch-sensitive capacitive switches on either side of the VDU screen. A further switch 5 connected to the control unit 1 is arranged to switch the control unit between different modes of operation, in the manner described in further detail below. This further switch 5 is positioned within the cabinet 6 in which the system is mounted so as to be available to the site operator but not to the normal user of the jukebox. There is also inside the cabinet 6 a socket 7 arranged to receive a data storage cartridge 8. In the preferred embodiment the control unit 1 includes a microprocessor 11 mounted on a printed circuit board and the socket 7 is formed as a 0.1 inch spaced double-sided 44-way edge connector mounted on the circuit board.

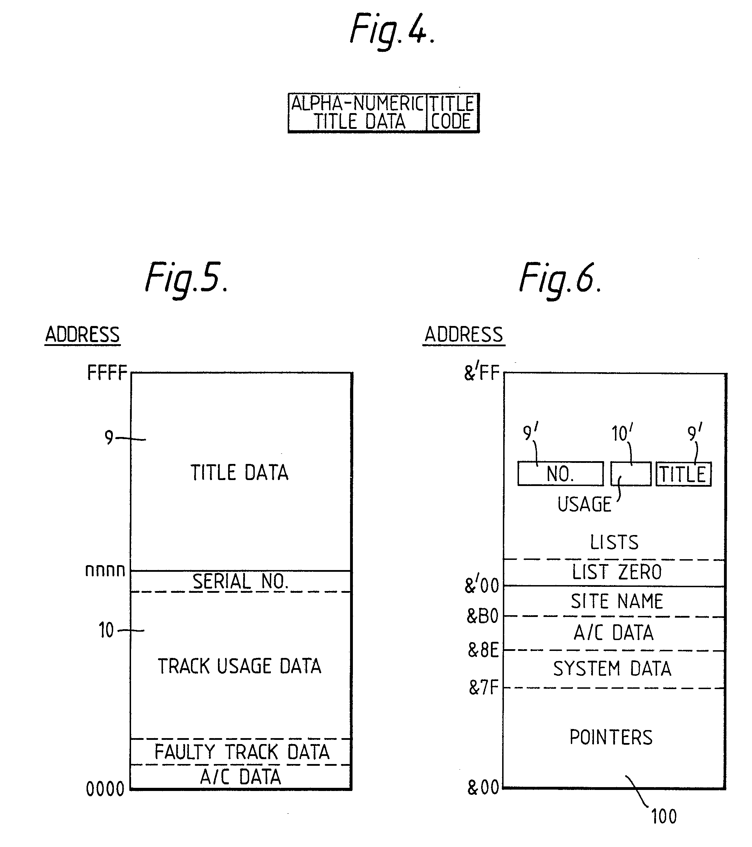

The data storage cartridge 8 is formed by a non-volatile semiconductor random access memory. In the present example this is a low power consumption CMOS RAM and a battery is provided in the cartridge so that the RAM is powered even when the main system is turned off. The memory in the data storage cartridge 8 is divided into a number of regions including a first region 9 in which pre-programmed data is stored and a second region 10 in which the control unit 1 writes data. The first and second regions may be arranged one above the other as shown in Figure 5 but in the preferred embodiment the first and second regions are split into a number of sub-regions 9', 10' distributed throughout the memory address space. In this case the memory includes a header region 100 which holds pointers for the sub-regions 9', 10'. Table 1 shows the format of the header region 100 and Table II shows the format of the lists of data. Each list but list zero contains the data for one disc. The data includes regions 9' of preprogrammed data and regions 10' of data written by the control unit. List zero contains the list of all disc titles. The pre-programmed data consists chiefly of the list of the titles of all the tracks in the associated batch of compact discs. Where desired there can also be provided related data for each track such as the playing time. In the first embodiment the data for each track is stored in the format shown in Figure 4 with title data which is used directly by the control unit to generate the display followed by a title code which is not displayed but is used in the operation of the control unit 1 in the manner described below. In the preferred embodiment however the format of Table II is used.

A microprocessor 11 within the control unit 1 controls the reading and writing of data to the cartridge in a conventional fashion. In the preferred embodiment the microprocessor 11 is a 6502 processor produced by Rockwell. The microprocessor 11 is programmed so that the first memory region 9, 9' is treated as a reserved address space from which data is read but to which data is never written. In the first embodiment when the data cartridge is first installed in the system the control unit 1 writes to the cartridge 8 a serial number which uniquely identifies the particular installation. The serial number is written at the address immediately below the reserved address space and its address is subsequently treated as being unavailable for writing so that the reserved space is effectively extended to include it.

A second region of memory 10 below the reserved address space is available for the control unit 1 to write to. Each time a user selects a track the control unit 1 updates a value in the lower address space 10 which records the total number of times that track has been selected since the cartridge was installed. The appropriate address is determined from the title code associated with the title data read from the reserved address space. The bulk of the lower address space is taken up with this track usage data. In addition however sub-regions are provided in which, for example accounting information is recorded. A coin slot 13 is provided on the face of the housing. The value of coins placed in the slot 13 is detected by an electronic coin detection system such as that marketed by Mars GB Ltd with the serial number MS1114. Data from the electronic coin mechanism is fed to the control unit 1 which enables the reproduction system when an appropriate number of coins has been received and at the same time updates a record of the total money received held in the sub-region of the data storage cartridge 8. The cartridge 8 includes a look-up table defining the number of credits given for a particular combination of coins.

The control unit 1 also records in the data cartridge in the second region 10,10' the identity of any tracks which are rejected by the compact disc player 2. The compact disc standard provides for the outputting of an error code if a track is found to be faulty and cannot be played. The control unit 1 is connected to the data output of the player 2 and upon detecting an error code indicating that a selected track cannot be played writes a code identifying that track to the second region 10, 10' of the memory. Subsequently when the cartridge 8 is analysed this data is used to identify and remove faulty discs.

Although the jukebox will normally be coin operated the switch 5 within the housing may be used by the site operator to select a mode of operation in which the jukebox may be used without charge. The control unit 1 includes an internal clock. The times at which the apparatus is in the free mode are recorded in the data cartridge so that the site operator can be charged for the playing time.

In use therefore the control unit reads title data from the data storage cartridge 8 and via a VDU controller 12 generates a display on the VDU 3. In the preferred example the display uses the well known Teletext format. This format has the advantage of minimising the data required to generate the display. The VDU 3 is typically a high resolution RGB monitor. Using the data from the data storage cartridge 8 the control unit 1 generates on the VDU 3 a scrolling menu of track titles. The user then inserts coins in the coin acceptor 13 and indicates his selection by touching a touch-sensitive switch 4 adjacent the displayed title. The control unit then writes to the data storage cartridge 8 an updated value for the usage count for that particular track at the same time as transmitting to the compact disc player 2 appropriate control signals which cause the selected track to be played or added to a queue as appropriate. The control unit 1 also updates the accounting data in the cartridge 8 to take account of the further coins received. When after a period of time a new batch of discs is brought to the site-operator together with a replacement data cartridge the existing data cartridge 8 is removed and taken away for analysis to determine the frequency with which the different tracks were played and the total money received. This information is used to control the selection of discs in future batches provided to the site in question and may also be used for example to provide information required by copyright protection societies.

In case the information stored in the writable regions of the data storage cartridge 8 should be needed by the site-operator himself the control unit 1 provides a further mode of operation also selected using the further switch 5 which is not of course normally available to the user. In this further mode the stored data in the writable region 10, 10' of the data cartridge is read back into the control unit 1 and displayed on the VDU 2. This mode enables the site-operator to make his own record of the accounting data and any other information and, for example, to use this to verify records subsequently prepared by the licensing operator after the cartridge 8 is removed for analysis.

The control unit 1, the VDU controller 12 and the VDU display 3 are used to generate a variety of displays designed to attract the attention of the user. When no credits remain the system enters a "cycle" mode in which a sequence of static and moving displays are repeated until a coin is inserted. Once a coin has been inserted then a "selection" mode is entered and continues until no more credit remains at which time the cycle mode begins again. In addition to the vertically scrolling main display the bottom line of the screen is used as a continually moving sideways scrolling display which provides various instructions to the user and by its constant movement adds to the eye-catching nature of the system. The cycle mode, for example, may consist of a sequence of screens comprising first a logo, then instructions on the use of the jukebox and the price of play, subsequent to that a demonstration sequence showing how the selection process works with a disc and track selected at random so that over a period of time the user will see a variety of discs and track titles. Then typically the instructions are repeated followed by a further logo which may be the standard compact disc logo. This may be followed by a screen of advertising, then further instructions and then, if the system is in use, a screen showing the disc and track titles of the currently playing track. This sequence of screens is repeated in a loop until a coin is inserted at which point the Select mode starts.

To indicate that the coin has been registered a logo is displayed and then shortly afterwards a list of all the discs available for selection. The selection process is in two parts: disc selection and then track selection. Once a coin has been inserted the user can browse freely through the contents list by selecting a disc and then examining its tracks and pressing cancel to choose another disc. All selection is done via a system of menus with choices indicated by pressing an appropriate one of the touch-sensitive buttons 4. The displayed titles typically occupy two lines of up to 30 characters each centred automatically in the middle of the screen. A maximum of seven titles can be shown at once with a gap of one line between each pair of lines. The title in the middle of the screen is highlighted. It is the highlighted title which is selected if the switch 4 labelled Select is pressed. The user uses two of the other buttons 4 labelled UP and DOWN respectively to scroll the list until the desired title is highlighted and selected by pressing Select. A sequential number for each disc and track is given on the left hand side of the screen next to the title to allow the user to judge where in a sequence the title occurs. While the UP or DOWN keys are pressed the list scrolls, moving three lines at a time so that the list will always start with a track centred in the highlighted region. Once a disc and track have been selected it is added to the play queue which can hold up to 256 selections. The track is then played when its turn in the queue arrives. If there are no other titles in the queue the track is of course played immediately. If there are further credits remaining then the selection process begins again. Otherwise a caption saying "selection complete" is given and the display enters the Cycle mode until another coin is inserted.

Although in the preferred embodiment an integral jukebox is used other arrangements are possible. For example the display 3 and user inputs 4 may be mounted remotely from the disc player which may be kept out of sight. In this case the control unit 1 is split between the remote unit and the unit housing the player.

## TABLE I

HEADER

BYTES &00-&79: Pointers to Lists 0-60. These are offsets from the start of the data. If null then the list does not exist. Two bytes per pointer, low followed by high. Lists must be contiguous, i.e. there should be no holes even if there are discs missing.

BYTE &7A-&7E: Undefined

BYTE &7F: Error flag. If set to &FF, the cartridge data may be corrupted. This is set by the jukebox program when it encounters a bad character while displaying titles. Normally set to &00.

BYTES &80-&84: 'DATA' string, allowing cartridge to be recognised as valid. Terminated in <0D>.

BYTE &85: Undefined.

BYTE &86: Used by the jukebox/wallbox programs to store the current value of CREDITS. The value here is constantly updated so that in event of power failure the value can be reinstated. This should normally be zero and is cleared by the disc management system.

BYTE &87: Length of autoplay period in minutes. This is the duration after which the jukebox will play a track at random to attract attention to itself. If zero then the feature is disabled.

## TABLE I Continued

BYTES &88-&8C: Software version string of the last jukebox/wallbox to use this cartridge. normally in the form 'J2.00' where the first letter signifies the type of unit (J=Jukebox, W=Wallbox).

BYTES &8E-&8F: Total money taken (should be sum of &90 to &97) in 10p units.

BYTE &8D: ID of last WALLBOX unit to use this cart.

BYTES &90-&91: Value of 10p coins in 10p units.
BYTES &92-&93: Value of 20p coins in 10p units.
BYTES &94-&95: Value of 50p coins in 10p units.
BYTES &96-&97: Value of £1 coins in 10p units.

BYTES &98-&A1: Price of play table. The ten entries equate to the number of credits to be given for 10p to £1 in 10p steps. If the MSB is set then the value will be displayed on the instructions page of the jukebox (eg 1 PLAY 30p, 2 PLAYS 50p, 5 PLAYS £1).

BYTES &A2-&AB: Reserved for possible future expansion of credit system to £2.
BYTES &AC-&AD: Total plays of jukebox/wallbox.
BYTES &AE-&AF: Undefined.
BYTES &B0-&B7: Site name line 1, displayed on the WELCOME page of the jukebox. If blank (all spaces) then the welcome page is disabled.
BYTES &B8-&FF: Site name line 2, displayed at the bottom of the WELCOME page.

## TABLE II

LIST FORMAT


Addresses given are offsets from the start of the list.


```
BYTE &00:      always &FF, signifying start of line.
     &01:      The list number (00-60).

     &02:      Disc number, or 00 if this is list 0 (disc
               titles)
     &03:      Track number, or disc number if list 0
     &04:      Number of plays, low byte, for this track
               or disc if list 0
     &05:      High byte of the above, up to bit 5.  Bit
               6 is set if this disc/track was rejected
               indicating a possible fault.  Bit 7 is
               always set to indicate the beginning of
               the title.
     &06-??    First line of title terminated in &0D,
               followed by second line, also terminated
               in &0D.
```


Bytes 02 onwards are then repeated for each title in the list.  The end of data is marked by two consecutive &FFs, which is an impossible list number.


**Claims**


1. A programmable reproduction system for playing digitally encoded records comprising
a reproduction apparatus (2) arranged to play a selected one of a number of records,
a control unit (1) connected to the reproduction apparatus (2), the control unit including a video display unit (3) for displaying details of records available for selection by the user and input means (4) for the user to input a selection, the control means (1) being arranged to transmit a control signal to the reproduction apparatus (2) to cause the selected record to be played, and
a writable data storage unit (8) releasably connected to the control unit (1), in use the control unit (1) reading from the data storage unit data for display on the visual display unit (3), and writing to the data storage unit (8) details of the selection made by the user, the details being stored in the data storage unit (8) for subsequent analysis.

2. A system according to claim 1 in which the system is coin-operated, the control unit (1) including a coin acceptor (13) and being arranged to write to the data storage unit (8) details of the coins accepted by the coin acceptor unit (13).

3. A system according to claim 1 or 2 in which the data storage unit (8) comprises a non-volatile random access memory including first and second data storage regions (10), the first data storage region (9) being arranged to store pre-programmed details of the records available for selection in the reproduction system and the second data storage region (10) being arranged to store details of the selections made by users, the control unit (1) being arranged to read data from the first data storage region (9) and to write data to the second data storage reg,on (10).

4. A system according to claim 3 in which the second data storage region (10) is arranged to record the total number of occasions on which each record is selected, the control unit (1) being arranged to increment the corresponding data item in the second data storage region (10) each time a record is selected.

5. A system according to any one of the preceding claims, in which the control unit (1) is connected to a data output of the reproduction apparatus (2), the control unit (1) including means to detect an error code from the data output indicating that a selected record is unplayable and being arranged to write data identifying the unplayable selected record in the data storage unit (8).

# Fig.1.

# Fig.2.

# Fig.3.

# Fig.4.

| ALPHA-NUMERIC TITLE DATA | TITLE CODE |
|---|---|

# Fig.5.

ADDRESS

```
FFFF ┌──────────────┐
     │              │
  9 ─┤              │
     │  TITLE DATA  │
     │              │
     │              │
nnnn ├──────────────┤
     │  SERIAL NO.  │
     ├┄┄┄┄┄┄┄┄┄┄┄┄┄┄┤
 10 ─┤              │
     │ TRACK USAGE  │
     │    DATA      │
     │              │
     ├┄┄┄┄┄┄┄┄┄┄┄┄┄┄┤
     │ FAULTY TRACK │
     │    DATA      │
     ├┄┄┄┄┄┄┄┄┄┄┄┄┄┄┤
     │   A/C DATA   │
0000 └──────────────┘
```

# Fig.6.

ADDRESS

```
&'FF ┌──────────────────┐
     │  ┌────┐ ┌──┐ ┌─────┐│
     │  │NO. │ │, │ │TITLE││
     │  └────┘ └──┘ └─────┘│
     │     USAGE         │
     │      LISTS        │
     ├┄┄┄┄┄┄┄┄┄┄┄┄┄┄┄┄┄┄┄┤
     │    LIST ZERO      │
&'00 ├──────────────────┤
     │    SITE NAME      │
&B0  ├┄┄┄┄┄┄┄┄┄┄┄┄┄┄┄┄┄┄┄┤
     │    A/C DATA       │
&8E  ├┄┄┄┄┄┄┄┄┄┄┄┄┄┄┄┄┄┄┄┤
     │   SYSTEM DATA     │
&7F  ├┄┄┄┄┄┄┄┄┄┄┄┄┄┄┄┄┄┄┄┤
     │                   │
     │    POINTERS       │
     │                   │
&00  └──────────────────┘
                    100
```